(19) Europäisches Patentamt
European Patent Office
Office européen des brevets

(11) **EP 1 746 842 A1**

(12) **EUROPEAN PATENT APPLICATION**
published in accordance with Art. 158(3) EPC

(43) Date of publication:
**24.01.2007 Bulletin 2007/04**

(51) Int Cl.:
***H04N 7/32*** *(2006.01)*

(21) Application number: **05709659.6**

(22) Date of filing: **27.01.2005**

(86) International application number:
**PCT/JP2005/001560**

(87) International publication number:
**WO 2005/081541 (01.09.2005 Gazette 2005/35)**

(84) Designated Contracting States:
**DE FR GB**

(30) Priority: **25.02.2004 JP 2004050295**

(71) Applicant: **SONY CORPORATION**
**Tokyo 141-0001 (JP)**

(72) Inventors:
• **TSUCHIYA, Toshiharu**
**c/o Sony Corporation**
**Shinagawa-ku, Tokyo 1410001 (JP)**
• **SATO, Kazushi**
**c/o Sony Corporation**
**Shinagawa-ku, Tokyo 1410001 (JP)**

• **WADA, Toru**
**c/o Sony Corporation**
**Shinagawa-ku, Tokyo 1410001 (JP)**
• **YAGASAKI, Yoichi**
**c/o Sony Corporation**
**Shinagawa-ku, Tokyo 1410001 (JP)**
• **YAMADA, Makoto**
**c/o Sony Corporation**
**Shinagawa-ku, Tokyo 1410001 (JP)**

(74) Representative: **Jackson, Jonathan Andrew et al**
**D Young & Co**
**120 Holborn**
**London EC1N 2DY (GB)**

(54) **IMAGE INFORMATION ENCODING DEVICE AND IMAGE INFORMATION ENCODING METHOD**

(57) In a picture information encoding apparatus that outputs picture compression information according to a picture encoding system such as MPEG4/AVC, when it is determined whether the mode of a predetermined block is a skip mode or a spatial direct mode, moving vector information and so forth for all of predetermined adjacent blocks needs to have been computed. However, when each block is processed in parallel to speed up the entire processes, moving vector information and so forth of the predetermined adjacent blocks may not be always obtained. In this case, moving vector information and so forth of neighbor blocks instead of adjacent blocks are pseudo-used to determine the mode of the block without need to wait until moving vector information and so forth of adjacent blocks have been computed.

**Fig. 10**

EP 1 746 842 A1

**Description**

Technical Field

The present invention relates to a picture information encoding apparatus that is used when picture information (bit stream) that has been compressed by an orthogonal transforming process such as the discrete cosine transforming process or the Karnen-Loeve transforming process and a motion compensating process as in the MPEG (Moving Picture Experts Group) or H.26x is received through a network such as a satellite broadcast, a cable television, the Internet, or a cellular phone or when the picture information is processed on a record medium such as an optical disc, a magnetic disc, or a flash memory.

Background Art

In recent years, a picture information encoding apparatus and a picture information decoding apparatus based on the MPEG, which deals picture information as digital information and compresses the picture information using redundancy, which comes with digital information, by an orthogonal transforming process such as the discrete cosine transforming process and a motion compensating process are being widespread both for information transmission in broadcasting stations and so forth and for information reception in end users' homes.

In particular, MPEG2 (ISO (International Organization for Standardization)/IEC (International Electrotechnical Commition) 13818-2) is defined as a general purpose picture encoding system. In addition, the MPEG2 is a standard that covers both an interlaced scanned picture and a progressively scanned picture and both a standard resolution picture and a high resolution picture. To date, the MPEG2 has been used in a wide range of professional applications and consumer applications. When the MPEG2 compression system is used, with a code amount (bit rate) of for example 4 Mbps (Bit per Second) to 8 Mbps allocated for an interlaced scanned picture having a standard resolution of 720 x 480 pixels and a code amount of for example 18 Mbps to 22 Mbps allocated for an interlaced scanned picture having a high resolution of 1920 x 1088 pixels, a high compression rate and a good picture quality can be accomplished.

The MPEG2 was designed for high picture quality encoding systems mainly for broadcast applications, not for encoding systems having a lower code amount (lower bit rate), namely a higher compression rate, than that of the MPEG1. As portable terminals are being widespread, it seems that needs of such encoding systems will increase. To deal with that, the MPEG4 encoding system has been standardized. With respect to a picture encoding system, ISO/IEC 14496-2 standard was approved as an international standard in December 1998.

In recent years, H.26L (ITU (International Telecommunication Union) - TQ6/16 VCEG) that was originally established for a picture encoding system for television conferences is being generally standardized. It is known that although the H.26L requires a larger computation amount for the encoding and decoding processes than conventional encoding systems such as MPEG2 and MPEG4, but the standard accomplishes a higher encoding efficiency than those. As a part of the MPEG4 activities, Joint Model of Enhanced - Compression Video Coding was approved in March, 2003 as H.264/AVC (Advanced Video Coding) as an international standard. The H.264/AVC is based on the H.26L and includes functions that are not supported thereby. This standard is also referred to as MPEG-4 Part 10. Hereinafter, in this specification, this standard is sometimes referred to as AVC (AVC standard). The following document 1 describes processes based on this standard.

"Draft Errata List with Revision-Marked Corrections for H.264/AVC", JVT-1050, Thomas Wiegand et al., Joint Video Team (JVT) of ISO/IEC MPEG & ITU-T VCEG, 2003

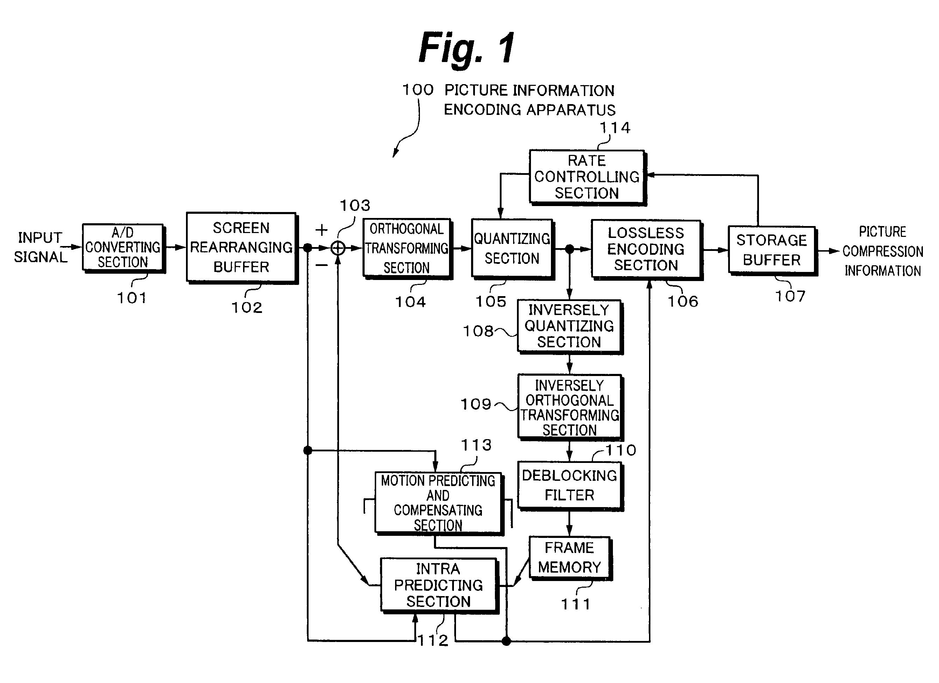

Next, with reference to a block diagram shown in Fig. 1, a conventional picture information encoding apparatus according to the AVC standard will be described. A picture information encoding apparatus 100 shown in Fig. 1 includes an A/D converting section 101, a screen rearranging buffer 102, an adding device 103, an orthogonal transforming section 104, a quantizing section 105, a lossless encoding section 106, a storage buffer 107, an inversely quantizing section 108, an inversely orthogonal transforming section 109, a deblocking filter 110, a frame memory 111, an intra predicting section 112, a motion predicting and compensating section 113, and a rate controlling section 114.

First of all, an input signal (picture signal) is provided to the A/D converting section 101. The A/D converting section 101 converts the input signal into a digital signal. Thereafter, the screen rearranging buffer 102 rearranges frames corresponding to a GOP (Group of Pictures) structure of picture compression information that is output.

With respect to a picture that is intra-encoded, namely a picture that is encoded with a single frame, difference information of the input picture and pixel values generated by the intra predicting section 112 is input to the orthogonal transforming section 104. The orthogonal transforming section 104 performs an orthogonal transforming process such as the discrete cosine transforming process or the Karnen-Loeve transforming process. A transform coefficient that is output from the orthogonal transforming section 104 is provided to the quantizing section 105. The quantizing section 105 performs an quantizing process with the provided transform coefficient. The quantized transform coefficient is output from the quantizing section 105 to the lossless encoding section 106. The lossless encoding section 106 performs a lossless encoding process such as the variable length encoding process or arithmetic encoding process for the quantized transform coefficient. Thereafter, the encoded transform coefficient is stored in the storage buffer 107 and then output as picture compression information from the picture information encoding apparatus 100.

An operation of the quantizing section 105 is controlled by the rate controlling section 114. The quantized transform coefficient, which is output from the quantizing section 105, is also input to the inversely quantizing section 108. In addition, the inversely orthogonal transforming section 109 performs an inversely orthogonal transforming process for the quantized transform coefficient and outputs decoded picture information. The deblocking filter 110 removes a block distortion from the decoded picture information and stores the resultant information in the frame memory 111. Information about an intra prediction mode applied to the current block/macro block in the intra predicting section 112 is sent to the lossless encoding section 106. The lossless encoding section 106 encodes the information as a part of header information of the picture compression information.

On the other hand, with respect to a picture that is inter-encoded, namely a picture that is encoded with picture information of a plurality of frames, information about a picture to be encoded is input to the motion predicting and compensating section 113. In addition, picture information of another frame to be referenced is input from the frame memory 111 to the motion predicting and compensating section 113. The motion predicting and compensating section 113 performs a motion predicting and compensating process for the picture and generates reference picture information. The phase of the reference picture information is inverted against the phase of the picture information. The adding device 103 adds the inverted reference picture information and the picture information and outputs a difference signal. In addition, the motion predicting and compensating section 113 outputs moving vector information to the lossless encoding section 106. Likewise, the lossless encoding section 106 performs a lossless encoding process such as the variable length encoding process or arithmetic encoding process for the moving vector information and inserts the encoded moving vector information into a header portion of the picture compression information. The other processes performed for a picture that is intra-encoded are the same as those performed for a picture that is inter-encoded.

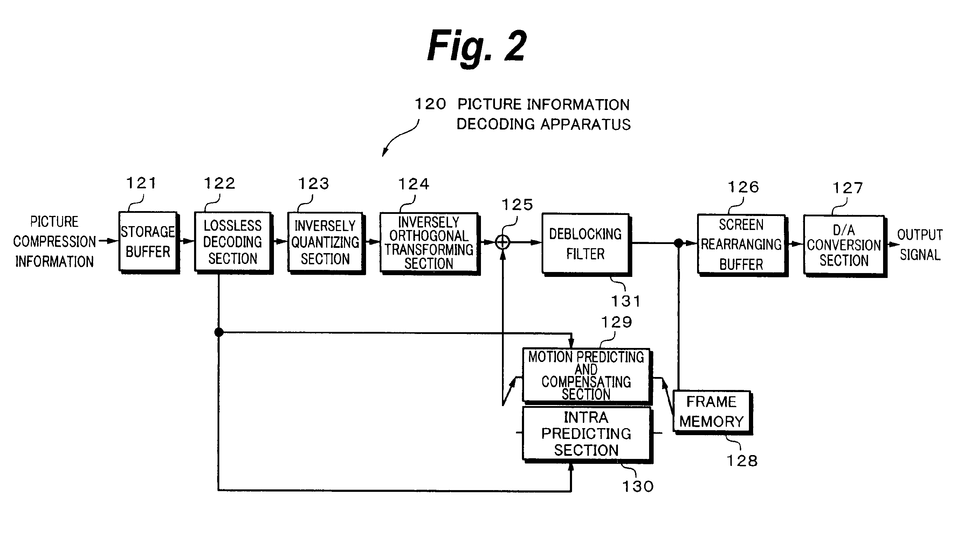

Next, with reference to a block diagram shown in Fig. 2, a picture information decoding apparatus 120 that compresses a picture by an orthogonal transforming process such as the discrete cosine transforming process or Karnen-Loeve transforming process and a motion compensating process. The picture information decoding apparatus 120 includes a storage buffer 121, a lossless decoding section 122, an inversely quantizing section 123, an inversely orthogonal transforming section 124, an adding device 125, a screen rearranging buffer 126, a D/A conversion section 127, a frame memory 128, a motion predicting and compensating section 129, an intra predicting section 130, and a deblocking filter 131.

First of all, input information (picture compression information) is stored in the storage buffer 121. Thereafter, the input information is transferred to the lossless decoding section 122. The lossless decoding section 122 performs a process such as the variable length decoding process or arithmetic decoding process according to the format of predetermined picture compression information. In addition, when the current frame has been intra-encoded, the lossless decoding section 122 also decodes intra prediction mode information stored in the header portion of the picture compression information and transfers the decoded information to the intra predicting section 130. When the frame has been inter-encoded, the lossless decoding section 122 also decodes moving vector information stored in the header portion of the picture compression information and transfers the decoded information to the motion predicting and compensating section 129.

A quantized transform coefficient that is output from the lossless decoding section 122 is input to the inversely quantizing section 123. The inversely quantizing section 123 outputs the transform coefficient. The inversely orthogonal transforming section 124 performs a four-order inversely orthogonal transforming process for the transform coefficient according to a predetermined system. When the current frame has been intra-encoded, the adding device 125 combines picture information for which an inversely orthogonal transfer process has been performed and a predicted picture generated by the intra predicting section 130. In addition, the deblocking filter 131 removes a block distortion from the combined information. The resultant information is stored in the screen rearranging buffer 126. The D/A conversion section 127 converts the information into analog information and then outputs the analog information.

When the current frame has been inter-encoded, the motion predicting and compensating section 129 generates a reference picture based on the moving vector information for which the lossless decoding section 122 has performed the lossless decoding process and the picture information stored in the frame memory 128. The adding device 125 combines the reference picture and an output of the inversely orthogonal transforming section 124. The other processes performed for a frame that has been inter-encoded are the same as those performed for a frame that has been intra-encoded.

In the picture information encoding apparatus 100 shown in Fig. 1, the motion predicting and compensating section 113 performs an important role in accomplishing a high compression efficiency. The AVC encoding system uses the following three systems to accomplish a higher compression efficiency than conventional picture encoding systems such as the MPEG2 and MPEG4.

In other words, the first system is a reference of multiple frames; the second system is a motion prediction and compensation using a variable block size; and the third system is a motion compensation having an accuracy of 1/4 pixel.

In the first system, a plurality of frames are referenced. According to the AVC encoding system, one or more preceding frames can be referenced to predict and compensate the current frame. According to the MPEG2 and MPEG4, only the immediately preceding frame is referenced when the current frame is motion-predicted and compensated. When the immediately preceding frame is referenced, only with a moving vector that denotes the motion of a moved object and difference data of the object picture, a frame to be encoded can be reproduced. As a result, a compression rate of encoded data can be improved. However, as in the AVC encoding system, when there are a plurality of frames to be referenced, it can be expected that difference data can be further decreased. As a result, the compression rate is further improved.

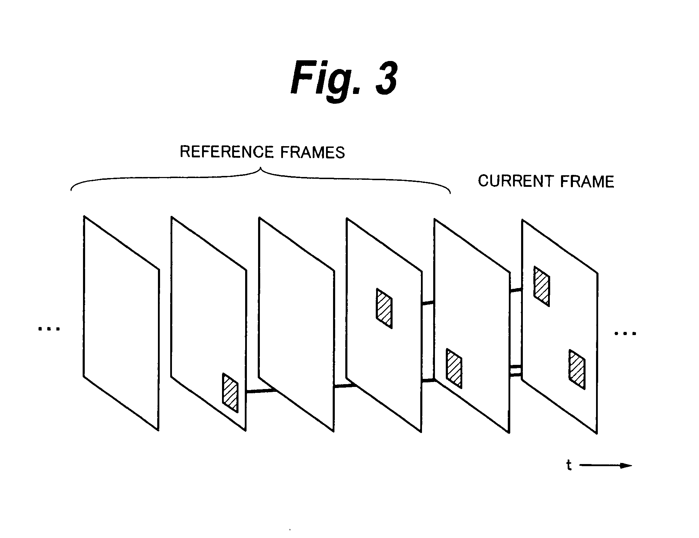

As shown in Fig. 3, when a macro block that is included in one (current) frame is processed, a plurality of frames can be referenced. This process can be accomplished by the motion predicting and compensating section 113 of the picture information encoding apparatus 100 and the motion predicting and compensating section 129 of the picture information decoding apparatus 120. The motion predicting and compensating section 113 stores the preceding frames to the frame memory 111. The motion predicting and compensating section 129 stores the preceding frames to the frame memory 128.

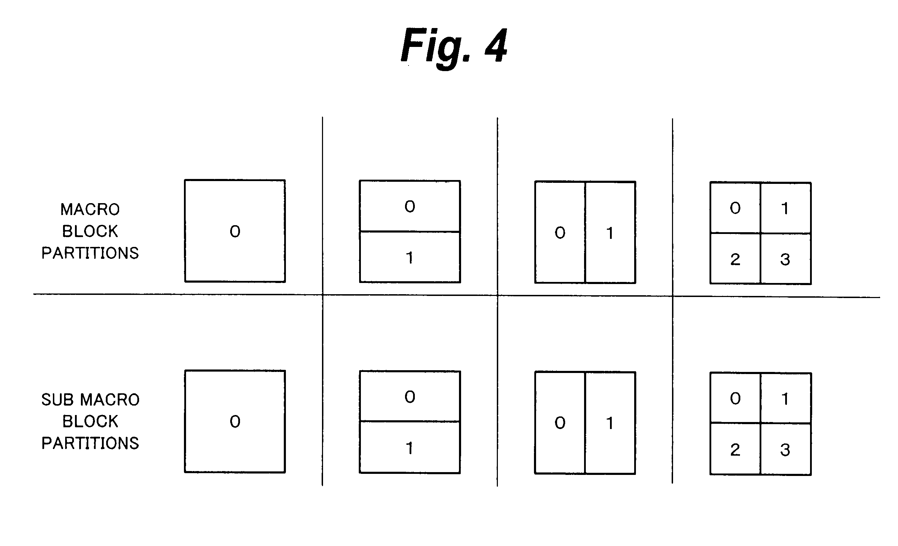

The second system is a motion predication and compensation using a variable block size. According to the AVC encoding system, as shown in Fig. 4, one macro block can be divided into motion compensation blocks each having a size of at last 8 (pixels) x 8 (pixels). In addition, a motion compensation block of 8 x 8 can be divided into sub macro blocks (partitions) having a size of at least 4 x 4. Each motion compensation block of each macro block can have moving vector information.

A video sequence generated according to the AVC encoding system has hierarchical levels of frame (picture) (highest level) > slice > macro block > sub macro block > pixel (lowest level). A sub macro block of 4 x 4 may be referred to simply as a block. However, in this description, a macro block and a sub macro block are sometimes referred to as a "block".

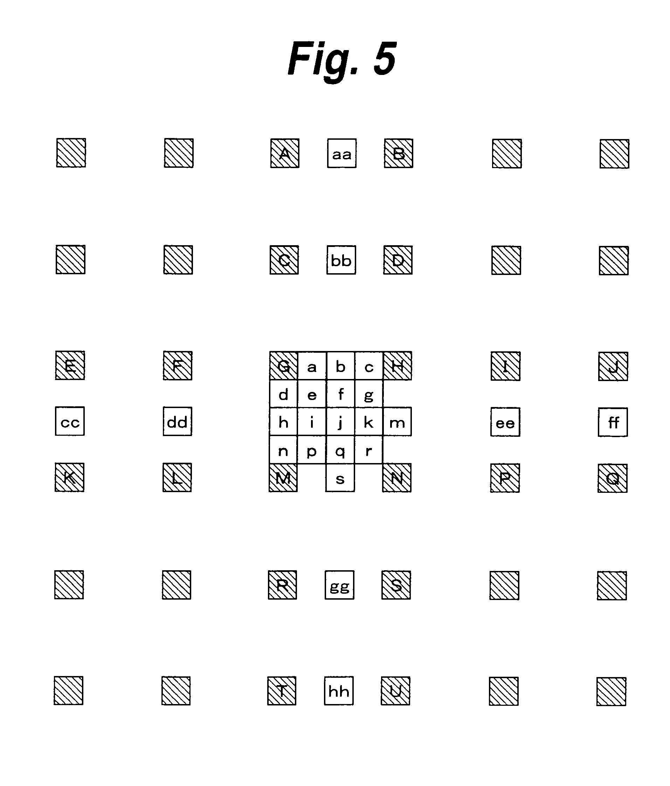

The third system is a motion compensating process having an accuracy of 1/4 pixel. With reference to Fig. 5, this process will be described. First of all, a pixel value having an accuracy of 1/2 pixel is generated. Thereafter, a pixel value having an accuracy of 1/4 pixel is computed. To generate a pixel value having an accuracy of 1/2 pixel, the following 6-tap FIR (Finite Impulse Response) filter has been defined.

$$\{1, \ -5, \ 20, \ 20, \ -5, \ 1\} \ \ldots \ (\text{Formula 1})$$

In Fig. 5, portions designated by uppercase alphabetic letters denote integer pixels (integer samples). On the other hand, portions designated by lowercase alphabetic letters denote fractional pixels (fractional samples) (for example, 1/2 pixels or 1/4 pixels). Pixel values b and h each having an accuracy of 1/2 pixel are obtained with pixel values of neighbor pixels each having an integer pixel accuracy and the foregoing filter in the following manner.

$$b1 = (E - 5F + 20G + 20H - 5I + J) \ \ldots$$
$$(\text{Formula 2})$$

$$h1 = (A - 5C + 20G + 20M - 5R + T) \ \ldots$$
$$(\text{Formula 3})$$

In addition, by the following clip process, b and h are obtained in the following manner.

$$b = \text{Clip1} \ ((b1 + 16) >> 5) \ \ldots \ (\text{Formula 4})$$

```
h = Clip1 ((h1 + 16) >> 5) ... (Formula 5)
```

where Clipl(x) = Clip3(0, 255, x).
Clip3 is defined as follows.

$$Clip3(x, y, z) = \begin{cases} x; z < x \\ y; z > y \\ z; others \end{cases} \quad \dots \text{ (Formula 6)}$$

"x >> y" denotes that x that is a binary in 2's complement notation is shifted rightward by y bits.
j1 is obtained with aa, bb, cc, dd, ee, ff, gg, and hh according to one of Formula 7 and Formula 8 in the same manner that b and h are obtained. Pixel value j having an accuracy of 1/2 pixel is obtained on the basis of j1 according to Formula 9.

```
j1 = cc - 5dd + 20h + 20m - 5ee + ff ...

(Formula 7)
```

```
j1 = aa - 5bb + 20b + 20s - 5gg + hh ...

(Formula 8)
```

```
j = Clip1((j1 + 512) >> 10) ... (Formula 9)
```

Pixel values a, c, d, n, f, i, k, and q each having an accuracy of 1/4 pixel are obtained by linearly interpolating a pixel value having an accuracy of an integer pixel and a pixel value having an accuracy of 1/2 pixel according to Formula 10 to Formula 17.

```
a = (G + b + 1) >> 1 ... (Formula 10)
```

```
c = (H + b + 1) >> 1 ... (Formula 11)
```

```
d = (G + h + 1) >> 1 ... (Formula 12)
```

```
n = (M + h + 1) >> 1 ... (Formula 13)
```

```
f = (b + j + 1) >> 1 ... (Formula 14)
```

$$i = (h + j + 1) >> 1 \quad ... \quad (\text{Formula 15})$$

$$k = (j + m + 1) >> 1 \quad ... \quad (\text{Formula 16})$$

$$q = (j + s + 1) >> 1 \quad ... \quad (\text{Formula 17})$$

Pixel values e, g, p, and r each having an accuracy of 1/4 pixel can be obtained by linearly interpolating pixel values each having an accuracy of 1/2 pixel according to Formula 18 to Formula 21.

$$e = (b + h + 1) >> 1 \quad ... \quad (\text{Formula 18})$$

$$g = (b + m + 1) >> 1 \quad ... \quad (\text{Formula 19})$$

$$p = (h + s + 1) >> 1 \quad ... \quad (\text{Formula 20})$$

$$r = (m + s + 1) >> 1 \quad ... \quad (\text{Formula 21})$$

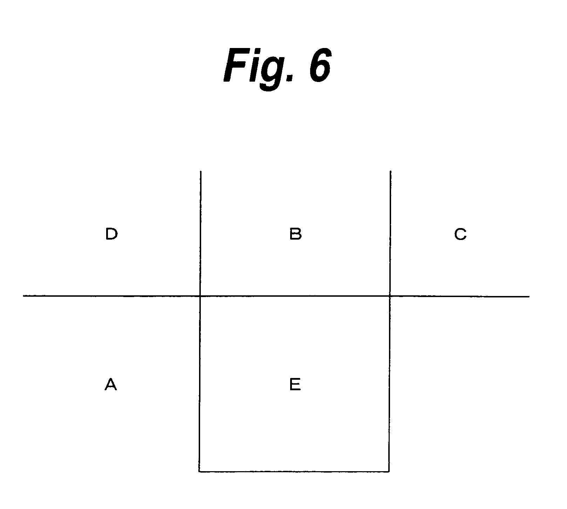

Next, with reference to Fig. 6, a moving vector encoding system defined in the AVC encoding system will be described. Fig. 6 shows block E and adjacent blocks A, B, C, and D. In this case, blocks A to E may be macro blocks or sub macro blocks. A predicted value of a moving vector of the block E as the current block (namely, a block for which the motion compensating process is performed) is generated in principle with moving vector information or the like of adjacent blocks A, B, and C. This process is referred to as median prediction.

When block C is neither present in the current picture (frame) nor the current slice or the moving vector information of block C and reference frames cannot be used depending on the process order, the motion compensating process for block E is performed with moving vector information and reference frames of block D instead of those of block C.

When all blocks B, C, and D are not present in the current picture or the current slice, moving vector information and reference frames of block A are used.

When the current frame has been intra-encoded or cannot be encoded with motion compensation information because the current frame is neither present in the current picture nor the current slice, the value of the moving vector is 0 and the value of the reference index (refIdx) is -1.

Next, the skip mode of a P picture (frame) will be described. In the AVC, a special encoding system referred to as "skip mode" is defined for a P picture. In the skip mode, moving vector information and coefficient information are not buried in a bit stream. When a decoding process is performed, moving vector information is restored according to a predetermined rule. Thus, the number of bits that are encoded can be decreased. As a result, a higher encoding efficiency can be accomplished.

This skip mode is a special mode only for blocks each having a block size of 16 x 16. In the skip mode, the value of the reference index (refIdexLO) of the moving vector information and so forth is 0. When one of the following three conditions is satisfied, both components (x, y) of the value of the moving vector become 0. Otherwise, the result of the foregoing median prediction is the value of the moving vector. In this case, it is assumed that the current block is block E.

Condition 1: block A or block B cannot be used.

Condition 2: The value of the reference index (refIdxL0A) of block A is 0 and the value of the moving vector is 0.

Condition 3: The value of the reference index (refIdxL0B) of block B is 0 and the value of the moving vector is 0.

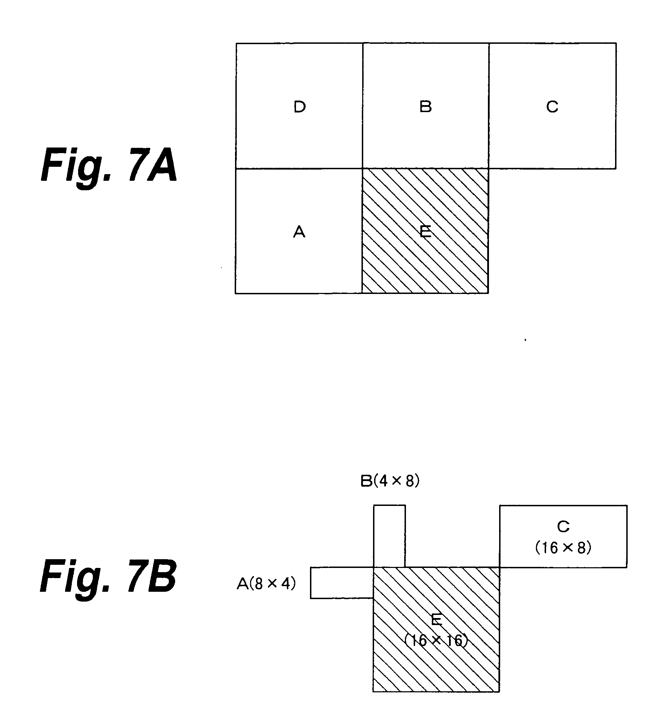

Fig. 7A shows an example of the case that blocks A to E described with reference to Fig. 6 each have a block size of 16 x 16.

Fig. 7B shows the case that block E as the current block has a block size of 16 x 16, block A has a block size of 8 x 4, block B has a block size of 4 x 8, and block C has a block size of 16 x 8. In this case, like the foregoing case, the skip mode is determined. When the block sizes of adjacent blocks are smaller than the block size of block E, a plurality of blocks contact block E. It is assumed that blocks that the upper left corner of block E contact are blocks A, D, and B and a block that the upper right corner of block E contact is block C.

Next, a direct mode of a B picture will be described. The direct mode is a special mode of blocks having a block size of 16 x 16 or a block size of 8 x 8. The direct mode is not applied to a P picture. Like the foregoing skip mode, since moving vector information is not transmitted, when a decoding process is performed, the moving vector information is generated with information about adjacent blocks. However, coefficient information of the motion compensating process of the encoding process is transmitted. In the direct mode, when coefficient information of a block having a block size of 16 x 16 is 0 as the result of the quantizing process, the block can be treated as the skip mode that does not have coefficient information.

As will be described later, the direct mode has a spatial direct mode and a temporal direct mode one of which can be designated for the current slice with a parameter (for example, "direct_spatial_mv_pred_flag") contained in the header of the slice.

At first, the spatial direct mode will be described. Before the spatial direct mode prediction is performed, the value of a predetermined flag (for example, "colZeroFlag") is set in the following manner.

In other words, when all the following conditions are "true", the value of flag "colZeroFlag" is set for 1 for each block of 4 x 4 or each block of 8 x 8. Otherwise, the value of the flag is set for 0.

(a) A reference frame (picture) referenced by RefPictListl[0] has been marked as a short-term reference picture.
(b) The value of a reference index to collocate macro blocks is 0.
(c) The values of both moving vector information mvCol[0] and mvCol[1] of collocate blocks are in the range from -1 to 1 in the accuracy of 1/4 pixel (when collocate macro blocks are field macro blocks, the accuracy in the vertical direction is 1/4 pixel in each field.

When the value of flag "colZeroFlag" is 1 or a moving vector (pmv) of the current block cannot be generated because all adjacent blocks have been intra-encoded, the condition of mv (moving vector) = 0 is applied to the current block. Otherwise, the value of a moving vector generated by the median prediction is applied to the current block.

The reference indexes of both List0 and List1 are the minimum values of neighbor blocks A, B, C (or D) shown in Fig. 7.

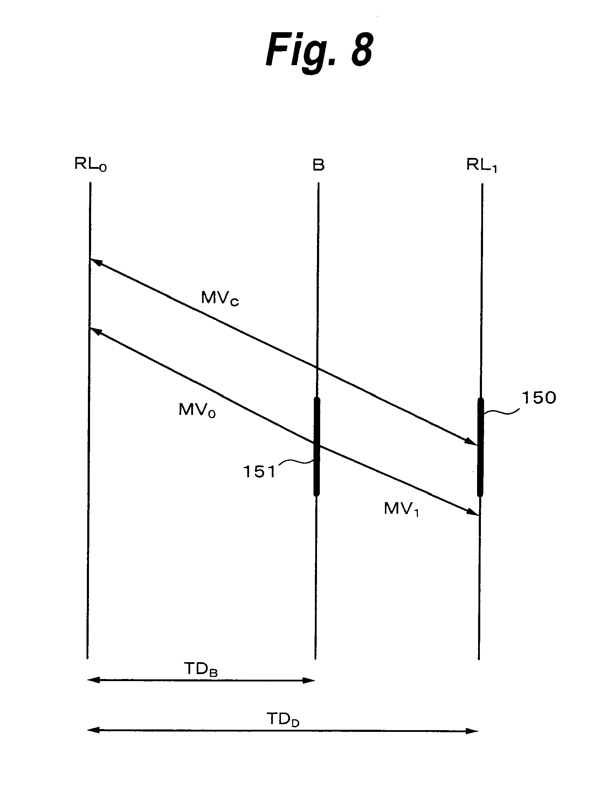

Next, the temporal direct mode will be described. Forward moving vector MV0 and backward moving vector MV1 are obtained from moving vector MVC of collocation blocks of the subsequent frame (picture) RL1. In Fig. 8, forward moving vector information of preceding frame RL0 of predetermined block 151 of frame B is designated by MV0. Moving vector information of subsequent frame RL1 is designated by MV1. Moving vector information of collocate blocks 150 of frame RL1 is designated by MVC. In the temporal direct mode, MV0 and MV1 are generated with MVC and distances TDD and TDD between the frame B and the reference frames RL0 and RL1 on the time axis according to Formula 22 and Formula 23 that follow.

$$MV0 = (TDB\ /TDD)\ MVC\ ...\ (Formula\ 22)$$

$$MV1 = ((TDD - TDB)\ /\ TDD)\ MVC\ ...\ (Formula\ 23)$$

As described above, many motion compensation modes have been defined in the AVC. The picture information encoding apparatus 100 shown in Fig. 1 selects an optimum mode for each macro block. This is an important technology for generating picture compression information having a high compression rate.

The following document 2 discloses a moving vector searching system according to the standardization of the AVC system.

"Rate-Distortion Optimization for Video Compression", G. Sullivan and T. Wiegand, IEEE Signal Processing Magazine, Nov. 1998.

According to this system (also referred to as RD (Rate-Distortion) optimization), motions having all accuracies are searched for a moving vector that minimizes the following value as a search result.

$$J(m, \lambda MOTION) = SA(T)D(s, c(m)) + \lambda MOTION \cdot R(m - p) \quad \ldots \text{(Formula 24)}$$

where m = (mx, my)T denotes a moving vector; p = (px, py)T denotes a predicted moving vector; $\lambda$MOTION denotes a Lagrange multiplier against the moving vector; and R(m - p) denotes a generated information amount of the difference of moving vectors obtained by a table lookup. The AVC encoding system defines two entropy encoding methods that are a method based on UVLC (Universal Variable Length Code) and a method based on CABAC (Context-based Adaptive Binary Arithmetic Coding). Even if the CABAC is used, the generated information amount obtained by the UVLC is used. The distortion can be obtained according to the following Formula 25.

$$SAD(s, c(m)) \sum_{x=1, y=1}^{B, B} \left| s[x, y] - c[x - m_x, y - m_y] \right| \quad \ldots \text{(Formula 25)}$$

In Formula 25, s denotes a picture signal of the current frame; and c denotes a picture signal of a reference frame. When a moving vector having an accuracy of 1/2 pixel or lower is compensated, SATD (Sum of Absolute Transform Difference) obtained using the Hadamard transforming process instead of the discrete cosine transforming process. Lagrange multiplier $\lambda$MOTION is given as follows. In other words, the Lagrange multiplier for I and P frames is given according to Formula 26. The Lagrange multiplier for a B frame is given according to Formula 27.

$$\lambda MODE, P = (0.85 * 2QP / 3) 1/2 \quad \ldots \text{(Formula 26)}$$

$$\lambda MODE, B = (4 * 0.85 * 2QP / 3) 1/2 \quad \ldots \text{(Formula 27)}$$

where QP denotes a quantizer parameter.
As a reference frame, a frame of which the value of Formula 28 becomes minimal is selected.

$$J(REF | \lambda MOTION) = SATD(s, c(REF, m(REF))) + \lambda MOTION \cdot (R(m(REF) - p(REF)) + R(REF)) \quad \ldots \text{(Formula 28)}$$

where R(REF) denotes a generated information amount of a reference frame obtained in UVLC.
As a predicted direction of a block of N x M of a B frame, a direction of which the value of Formula 29 becomes minimal is selected.

$$J(\text{PDIR} \mid \lambda\text{MOTION}) = \text{SATD}(s, c(\text{PDIR}, m(\text{PDIR})))$$

$$+ \lambda\text{MOTION} \cdot (R(m(\text{PDIR}) - p(\text{PDIR}) + R(\text{REF}(\text{PDIR}))) \ldots$$

(Formula 29)

As a macro block mode, a mode of which the value of Formula 30 becomes minimum is selected.

$$J(s, c, \text{MODE} \mid QP, \lambda\text{MODE}) = \text{SSD}(s, c, \text{MODE} \mid$$

$$QP) + \lambda\text{MODE} \cdot R(s, c, \text{MODE} \mid QP) \ldots \text{(Formula 30)}$$

where QP denotes a quantizer parameter of a macro block; and λMODE denotes a Lagrange multiplier for selecting a mode.
MODE as selection alternatives is given for each frame type by Formula 31 to Formula 33.

$$\text{I frame} \quad \text{MODE} \in \{\text{INTRA 4 x 4, INTRA 16 x}$$

$$16\} \ldots \text{(Formula 31)}$$

$$\text{P frame} \quad \text{MODE} \in \{\text{INTRA 4 x 4, INTRA 16 x 16,}$$

$$\text{SKIP, 16 x 16, 16 x 8, 8 x 16, 8 x 8}\} \ldots \text{(Formula 32)}$$

$$\text{B frame} \quad \text{MODE} \in \{\text{INTRA 4 x 4, INTRA 16 x 16,}$$

$$\text{DIRECT, 16 x 16, 16 x 8, 8 x 16, 8 x 8}\} \ldots \text{(Formula}$$

$$33)$$

where SKIP denotes one whose moving vector difference and coefficient difference are not transmitted in 16 x 16 mode; SSD denotes a sum of squares due to error; s denotes a picture signal of the current frame; and c denotes a picture signal of a reference frame.

$$\text{SSD}(s, c, \text{MODE} \mid QP) = \sum_{x=1,y=1}^{16,16} (s_y[x,y] - c_y[x,y,MODE \mid QP])^2$$

$$+ \sum_{x=1,y=1}^{8,8} (s_u[x,y] - c_u[x,y,MODE \mid QP])^2$$

$$+ \sum_{x=1,y=1}^{8,8} (s_v[x,y] - c_v[x,y,MODE \mid QP])^2 \ldots \text{(Formula 34)}$$

where R(s, c, MODE | QP) denotes a generated information amount of a macro block when MODE and QP have been selected. The generated information amount includes all information such as a header, a moving vector, and an orthogonal transform coefficient. cY[x, y, MODE |QP] and sY[x, y] denote luminance components of a reconstructed picture and an original picture, respectively. cU, cV, sU, and sV denote color difference components.

Lagrange multiplier λMOTION for an I frame and a P frame and that for a P frame are given by Formula 35 and Formula 36, respectively.

$$I, P \text{ frames}: \lambda\text{MODE, P} = 0.85 * 2QP / 3 ...$$

(Formula 35)

$$B \text{ frame}: \lambda\text{MODE, B} = 4 * 0.85 * 2QP / 3 ...$$

(Formula 36)

where QP denotes a quantizer parameter.

When a block of 8 x 8 is divided, a selection process that is same as the mode selection of a macro block is performed. A division mode of which the value of Formula 37 becomes minimal is selected.

$$J(s, c, MODE | QP, \lambda MODE) = SSD(s, c, MODE |$$

$$QP) + \lambda MODE \cdot R(s, c, MODE | QP) ... (Formula 37)$$

where QP denotes a quantizer parameter of a macro block; and λMODE denotes a Lagrange multiplier used when a mode is selected.

Alternatives of a selection mode denoted by MODE are given by Formula 38 and Formula 39 for a P frame and a B frame, respectively.

$$P \text{ frame} \quad MODE \in \{INTRA \ 4 \ x \ 4, \ 8 \ x \ 8, \ 8 \ x \ 4, \ 4$$

$$x \ 8, \ 4 \ x \ 4\} ... (Formula 38)$$

$$B \text{ frame} \quad MODE \in \{INTRA \ 4 \ x \ 4, \ DIRECT, \ 8 \ x \ 8,$$

$$8 \ x \ 4, \ 4 \ x \ 8, \ 4 \ x \ 4\} ... (Formula 39)$$

When the conventional picture information encoding apparatus 100 shown in Fig. 1 is accomplished as a hardware system that operates in real time, a parallel process like a pipeline process is essential as a high speed technology. In addition, depending on a high speed motion searching method, a moving vector in the skip mode or the spatial direct mode calculated in the method according to the rule defined in the standard may not be included in the search range of the moving vector.

In this case, in the skip mode or the spatial direct mode, in addition to the regular motion searching process, another motion searching process needs to be preformed for their moving vectors.

To determine these modes, moving vector information of adjacent macro blocks is needed. However, if each macro block that is pipeline-processed is not completed in a predetermined order, moving vector information of these adjacent macro blocks is not obtained. As a result, the skip mode and the spatial direct mode are prevented from being determined.

Therefore, an object of the present invention is to generate pseudo information even if a picture information encoding apparatus that outputs picture compression information according to a picture encoding system such as AVC cannot obtain vector information and so forth of adjacent blocks necessary for a parallel process such as a pipeline process so as to accomplish a high speed encoding process.

Another object of the present invention is to provide means for pseudo-computing moving vector information and reference index information that a picture information encoding apparatus that outputs picture compression information according to a picture encoding system such as AVC uses to determine the skip mode or the spatial direct mode so as to accomplish a high speed parallel process and effectively set a mode.

Disclosure of the Invention

A first aspect of the present invention is a picture information encoding apparatus that performs an encoding process for picture information using a motion prediction, wherein when the encoding process is performed for a block, at least one of moving vector information and coefficient information being omitted, and the encoding process has an encoding mode in which the omitted information can be restored at a decoding side according to a predetermined rule, the apparatus comprising: a determining section that determining whether the block can be encoded in the encoding mode with alternative information including motion information of predetermined adjacent blocks of the block; and a pseudo computing section that generates pseudo motion information instead of unusable motion information and provides the pseudo motion information as the alternative information, when the motion information of at least one of the adjacent blocks is unusable.

A second aspect of the present invention is a picture information encoding method of performing an encoding process for picture information using a motion prediction, wherein when the encoding process is performed for a block, at least one of moving vector information and coefficient information being omitted, and the encoding process has an encoding mode in which the omitted information can be restored at a decoding side according to a predetermined rule, the method comprising the steps of: determining whether the block can be encoded in the encoding mode with alternative information including motion information of predetermined adjacent blocks of the block; and generating pseudo motion information instead of the unusable motion information and providing the pseudo motion information as the alternative information, when the motion information of at least one of the adjacent blocks is unusable.

A third aspect of the present invention is a program that causes a computer to execute a picture information encoding method of performing an encoding process for picture information using a motion prediction, wherein when the encoding process is performed for a block, at least one of moving vector information and coefficient information being omitted, and the encoding process has an encoding mode in which the omitted information can be restored at a decoding side according to a predetermined rule, the method comprising the steps of: determining whether the block can be encoded in the encoding mode with alternative information including motion information of predetermined adjacent blocks of the block; and generating pseudo motion information instead of the unusable motion information and providing the pseudo motion information as the alternative information, when the motion information of at least one of the adjacent blocks is unusable.

According to the present invention, even if a picture information encoding apparatus that outputs picture compression information according to a picture encoding system such as AVC cannot obtain vector information and so forth of adjacent blocks necessary for a parallel process such as a pipeline process, since the apparatus can generate pseudo information, a high speed encoding process can be accomplished.

In addition, according to the present invention, means for pseudo-computing moving vector information and reference index information that a picture information encoding apparatus that outputs picture compression information according to a picture encoding system such as AVC uses is provided to determine the skip mode or the spatial direct mode so as to accomplish a high speed parallel process and effectively set a mode.

Brief Description of Drawings

Fig. 1 is a block diagram showing a structure of a conventional picture information encoding apparatus.
Fig. 2 is a block diagram showing a structure of a conventional picture information decoding apparatus.
Fig. 3 is a schematic diagram showing references of a plurality of frames in a motion predicting and compensating process.
Fig. 4 is a schematic diagram showing a macro block and a sub macro block.
Fig. 5 is a schematic diagram describing a motion compensating process having an accuracy of 1/4 pixel.
Fig. 6 is a schematic diagram describing a median prediction in a moving vector encoding system.
Fig. 7A and Fig. 7B are schematic diagrams describing a skip mode and a spatial direct mode, respectively.
Fig. 8 is a schematic diagram describing a temporal direct mode.
Fig. 9A and Fig. 9B are schematic diagrams describing a procedure of a motion compensating process for a macro block.

Fig. 10 is a block diagram showing a structure of a picture information encoding apparatus according to a first embodiment of the present invention.

Fig. 11 is a schematic diagram describing a pseudo-computation for alternatives of moving vector information according to the present invention.

Fig. 12 is a schematic diagram describing a pseudo-computation for alternatives of moving vector information according to the present invention.

Fig. 13 is a flow chart showing a procedure of a process of the picture information encoding apparatus according to the first embodiment of the present invention.

Best Modes for Carrying out the Invention

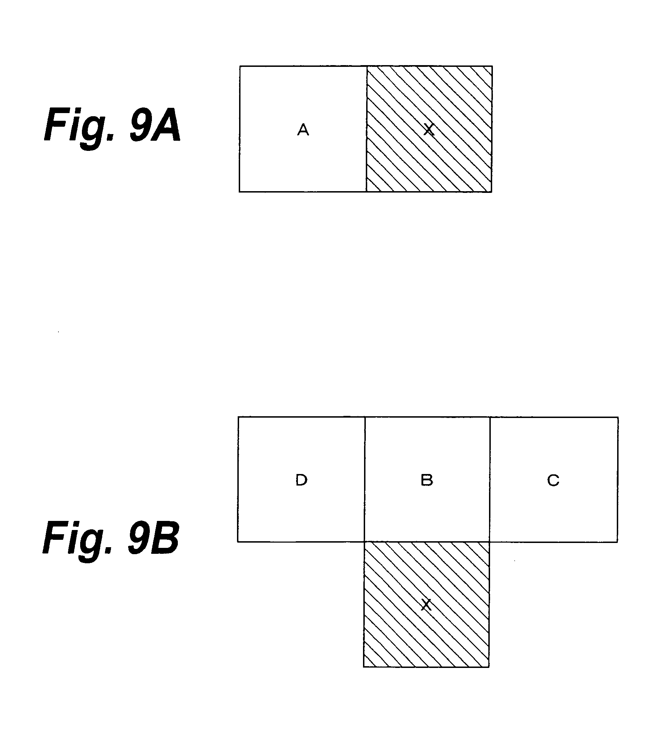

Before a picture information encoding apparatus according to the present invention is described, a specific example of which necessary vector information and so forth of adjacent blocks are not obtained due to a high speed process such as a pipeline process will be described with reference to Fig. 9. In Fig. 9A, it is assumed that X denotes a macro block that is currently being processed and A denotes a macro block adjacent thereto. When a motion searching process is being performed for X, moving vector information for A may not have been determined. As described above, each process phase for each macro block is executed in parallel. In Fig. 9B, assuming that X denotes a macro block that is currently being processed and B, C, and D denote macro blocks adjacent thereto, while a motion compensating process is being performed for X, moving vector information for B, C, and D may not have been determined.

According to the present invention, even if necessary vector information and so forth of adjacent blocks are not obtained due to a high speed process such as a pipeline process, pseudo moving vector information is generated. As a result, since subsequent processes are smoothly executed, a high speed encoding process is accomplished.

To solve the foregoing problem, the picture information encoding apparatus according to the present invention has an A/D converting device, a screen rearranging buffer, an adding device, an orthogonal transforming device, a quantizing device, a lossless encoding device, a storage buffer, an inversely quantizing device, an inversely orthogonal transforming device, a deblocking filter, a frame memory, an intra-predicting device, a motion predicting and compensating device, an alternative moving vector information computing device, and a rate controlling device. A method of pseudo-computing moving vector information used as alternative moving vector information in the skip mode and the spatial direct mode is introduced. As a result, means for accomplishing a high speed process such as a pipeline process is provided.

If moving vector information and reference index (reference frame) information that have been pseudo-obtained do not match moving vector information and reference index information that have been computed according to the rule of the AVC standard, respectively, these information is determined as a mode other than the skip mode or the spatial direct mode. As a result, it can be expected that a compression efficiency will be further improved. In the skip mode, the moving vector information is obtained for a block of 16 x 16. On the other hand, in the spatial direct mode, the moving vector information is obtained for a block of 16 x 16 or a block of 8 x 8. In this case, the moving vector information and the reference index mode are together referred to as "motion information".

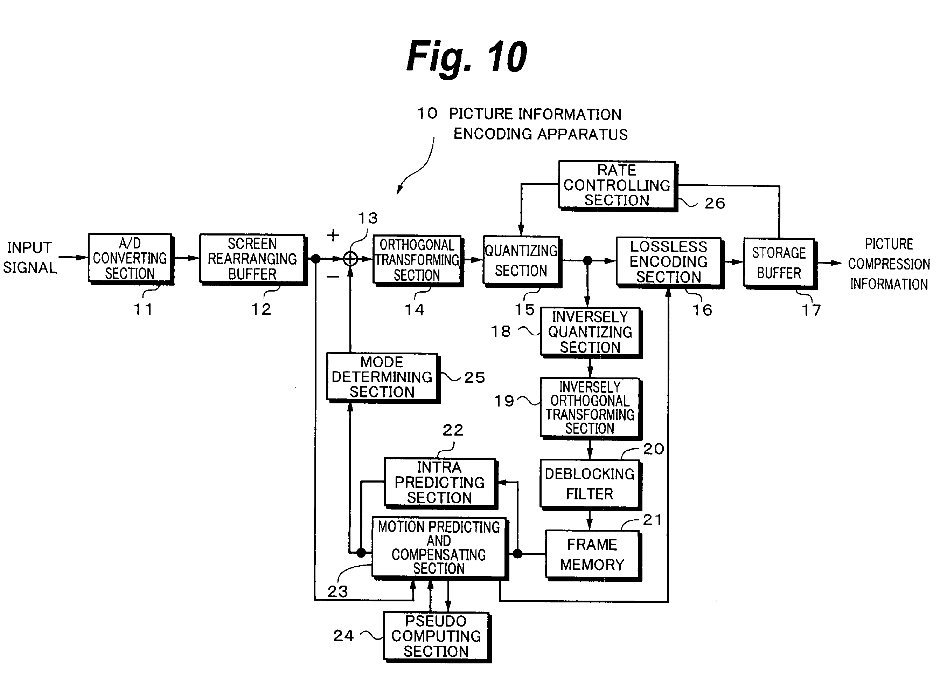

Next, with reference to Fig. 10, a picture information encoding apparatus according to a first embodiment of the present invention will be described. Fig. 10 is a block diagram showing a structure of the picture information encoding apparatus according to the first embodiment. The picture information encoding apparatus that is designated by reference numeral 10 has an A/D converting section 11, a screen rearranging buffer 12, an adding device 13, an orthogonal transforming section 14, a quantizing section 15, a lossless encoding section 16, a storage buffer 17, an inversely quantizing section 18, an inversely orthogonal transforming section 19, a deblocking filter 20, a frame memory 21, an intra-predicting section 22, a motion predicting and compensating section 23, a pseudo computing section 24, a mode determining section 25, and a rate controlling section 26.

The A/D converting section 11 converts an input analog picture signal into a digital picture signal and sends the digital picture signal to the screen rearranging buffer 12. The screen rearranging buffer 12 rearranges each frame of the digital picture signal according to a GOP structure of picture compression information that is output. The adding device 13 obtains the difference between the input frame and a reference frame when the input frame is inter-encoded.

The orthogonal transforming section 14 performs an orthogonal transforming process such as the discrete cosine transforming process or Karnen-Loeve transforming process for the input frame or the value of the difference between the input frame and the reference frame. The quantizing section 15 performs a quantizing process for an orthogonally transformed coefficient. The lossless encoding section 16 receives the quantized transformed coefficient from the quantizing section 15, performs a lossless encoding process such as a variable length code encoding process or an arithmetic encoding process for the quantized transformed coefficient, and sends the encoded coefficient to the storage buffer 17. The storage buffer 17 receives lossless-transformed picture compression information and stores it.

The inversely quantizing section 18 receives the quantized transformed coefficient from the quantizing section 15 and inversely quantizes the quantized transformed coefficient. The inversely orthogonal transforming section 19 performs an inversely orthogonal transforming process for the inversely quantized orthogonally-transformed coefficient. The deblocking filter 20 removes a block distortion from the decoded picture. The resultant decoded picture is stored in the frame memory 21. The frame memory 21 stores the decoded picture so as to perform a motion predicting and compensating process for the decoded picture.

The motion predicting and compensating section 23 inputs the decoded picture from the frame memory 21 and performs a searching process for moving vector information and motion compensating process. The pseudo computing section 24 pseudo-computes moving vector information used to determine the skip mode or the spatial direct mode to perform a high speed parallel process. The intra-predicting section 22 input a decoded picture from the frame memory 21 and performs an intra-predicting process for the decoded picture. The mode determining section 25 receives an output of the motion predicting and compensating section 23 and an output of the intra-predicting section 22 and determines whether the mode is the skip mode or the spatial mode.

The rate controlling section 26 controls the operation of the quantizing section 15 on the basis of information fed back from the storage buffer 17.

The picture information encoding apparatus 10 is different from the picture information encoding apparatus 100 shown in Fig. 1 in processes that the motion predicting and compensating section 23, the pseudo computing section 24, and the mode determining section 25 perform. Next, the processes that these sections of the picture information encoding apparatus 10 perform will be mainly described.

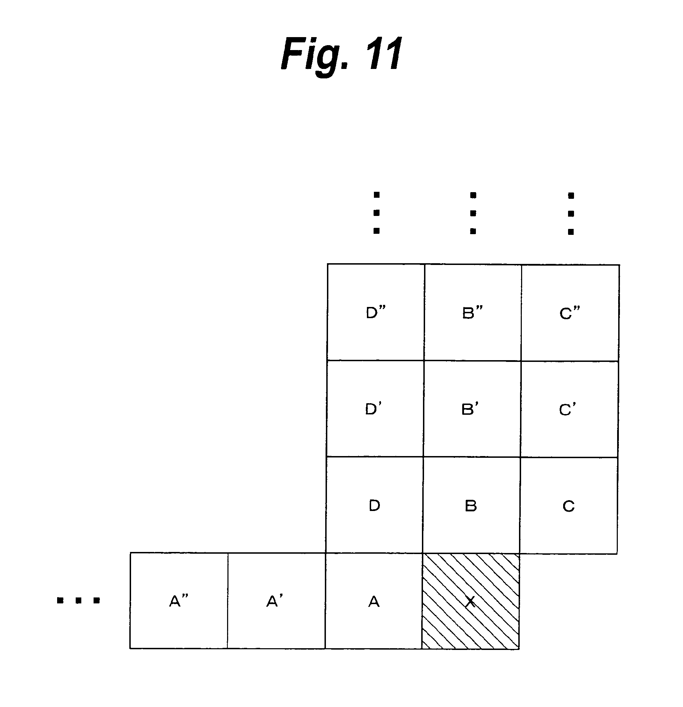

With reference to Fig. 11, the process that the pseudo computing section 24 performs will be described. As was described with reference to Fig. 7, when the motion predicting and compensating process is preformed for macro block X shown in Fig. 11, to determine whether the mode of the current macro block is the skip mode or the spatial direct mode, moving vector and reference index (refIdx) information for macro blocks A, B, and C (or D when C is not present because X is at a boundary of a frame) need to have been determined.

However, when the picture encoding process is performed in parallel, each process phase is executed in parallel for each macro block. Thus, when the motion predicting and compensating process is performed for a particular macro block, information about other macro blocks necessary for the process may not have been obtained.

Thus, when moving vector information and reference index information for macro blocks A, B, C, and D are not present, moving vector information and reference index information for macro blocks A', B', C', D', A", B", C", and D" shown in Fig. 11 are pseudo-computed instead of those for macro blocks A, B, C, and D. These information is used to determine the mode of the current macro block. In other words, these moving vector information is used as alternative moving vectors.

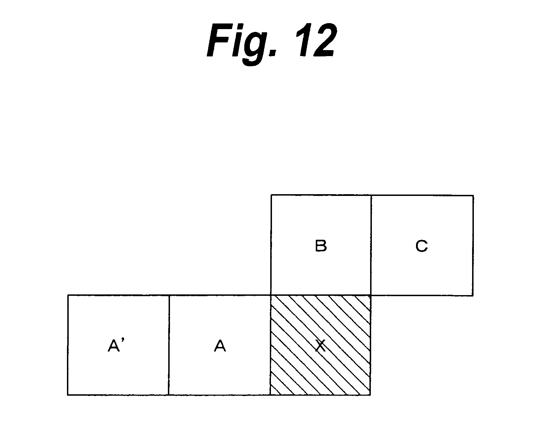

When moving vector information and reference index information for macro blocks B and c have been determined, but moving vector information and reference index information for macro block have not been determined, the mode of macro block X is determined with moving vector information and reference index information for block A' as shown in Fig. 12. In the spatial direct mode, reference index information for block A' is used.

Next, the process that the mode determining section 25 performs will be described. As described above, moving vector information (and reference index information) computed by the pseudo computing section 24 do not always match moving vector information for a predetermined macro block computed according to the rule of the AVC standard. Likewise, reference index information that has been computed by the pseudo computing section 24 does not always match that computed according to the rule of the AVC standard.

Thus, the mode determining section 25 compares moving vector information for a macro block computed according to the rule of the standard with moving vector information pseudo-computed by the pseudo computing section 24. In the spatial direct mode, the mode determining section 25 determines whether reference index information for a reference frame of List0 matches that of List1.

When moving vector information and reference index information for the macro block computed according to the rule of the standard match those pseudo-computed by the pseudo computing section 24, alternative moving vectors computed by the pseudo computing section 24 are used as alternative moving vector information in the skip mode or the spatial direct mode to perform any mode determining process. At this point, the mode may be determined on the basis of the foregoing RD optimization.

When the moving vector information for the macro block computed according to the rule of the standard does not match that for the macro block pseudo-computed by the pseudo computing section 24, the alternative moving vectors computed by the pseudo computing section 24 are discarded or used for alternative moving vectors for a block of 16 x 16 or a block of 8 x 8. Thereafter, any mode determining process is performed. As described above, in the skip mode, the moving vector information is used as moving vector information for a block of 16 x 16. In the spatial direct mode, the moving vector information is used as moving vector information for a block of 16 x 16 or a block of 8 x 8.

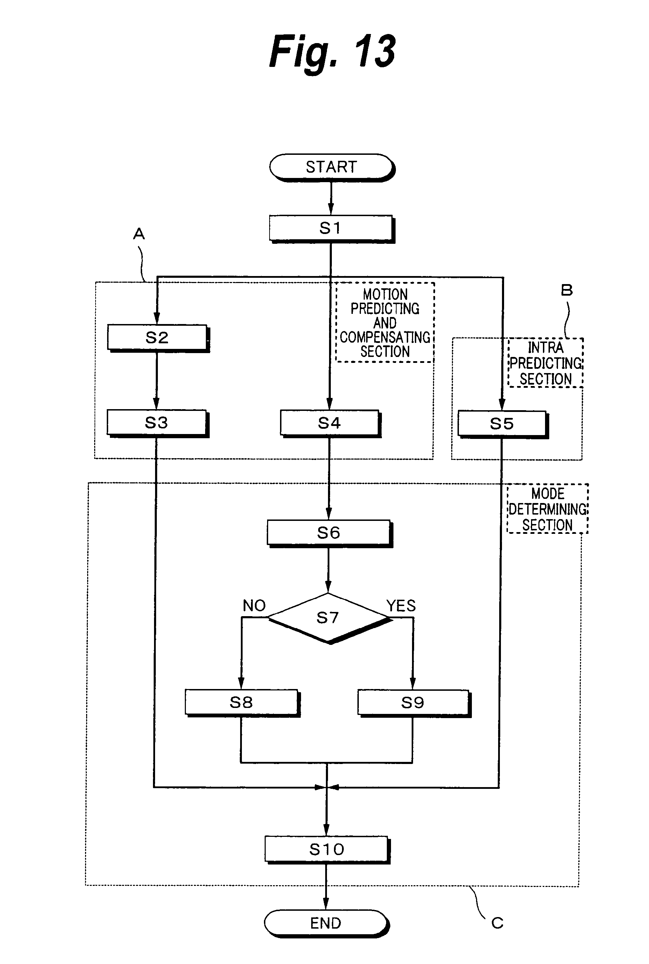

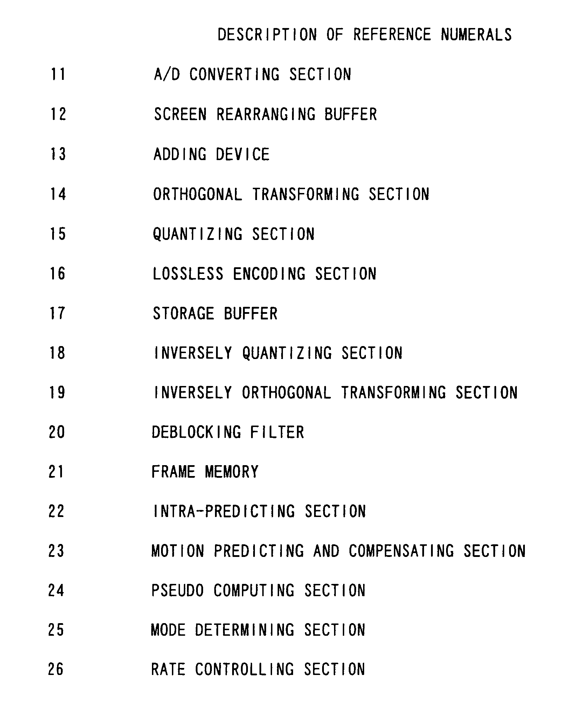

Next, a procedure of the foregoing mode determining process will be described with reference to a flow chart shown in Fig. 13. Fig. 13 shows three dot-lined blocks A, B, and C. This means that the process in the dot-lined block A is performed by the motion predicting and compensating section 23; the process in the dot-lined block B is performed by the intra-predicting section 22; and the process in the dot-lined block C is performed by the mode determining section 25.

At step S1, the pseudo computing section 24 computes moving vector information (and reference index information) that are used to determine whether the mode is the skip mode or the spatial direct mode. In this case, these information is referred to as information X. As shown in Fig. 11, when moving vector information for macro block A has not been computed with respect to the mode determination for macro block X, the pseudo computing section 24 obtains moving vector information for macro block A'. When moving vector information for macro block A' has not been computed, the pseudo computing section 24 obtains moving vector information for macro block A". Thus, when moving vector information for macro block A cannot be obtained, moving vector information for a macro block outwardly adjacent to macro block A, namely moving vector information for a macro block whose spatial distance is larger than the distance between A and X, is obtained. This process is repeated until moving vector information is obtained.

In the example shown in Fig. 11, A, A', A", and so forth are regularly selected. In other words, A' is a block that contacts a side of A, the opposite side of A contacting X. A" is a block that contacts a side of A', the opposite side of A' contacting A.

This operation of the pseudo computing section 24 applies to macro blocks B, C, and D. In this example, when moving vector information for macro block A has not been processed, instead, moving vector information for macro block A' is obtained. However, as long as moving vector information has been obtained, a macro block or a relative position with macro block X for which moving vector information is obtained can be freely designated. Instead of moving vector information for macro block A, moving vector information for a plurality of macro blocks other than macro block A may be used.

After step S1 has been completed, flow advances to step S4. At step S4, an evaluation index used to determine the mode for information X is computed. This index is required to quantize several macro blocks and estimate a necessary code amount. In this case, for example, a process such as the Hadamard transforming process is performed.

The motion predicting and compensating section 23 searches for optimum moving vector information for each block size such as 16 x 16 and 16 x 8 (at step S2). In addition, the motion predicting and compensating section 23 computes an evaluation index used to determine the mode for the moving vector information (at step S3). When the motion predicting and compensating section 23 searches for a moving vector, moving vector information and so forth for neighbor blocks are not used. Thus, even if moving vector information and so forth for all neighbor blocks have not been computed, the moving vector can be independently computed without need to wait for computed results of the moving vector information.

The intra-predicting section 22 computes an evaluation index used to determine the mode with information obtained from the frame (at step S5). The processes at step S3 and step S5 do not need to be executed along with the process at step S4 as long as these processes have been completed before the process at step S10 has been completed.

Thereafter, the flow advances to step S6. At step S6, alternative moving vector information (and reference index information) in the skip mode or the spatial direct mode are calculated according to the rule of the foregoing standard. Hereinafter, these information is referred to as information Y. When these information has been calculated at step S3, the results may be used.

At step S7, information X and information Y are compared. When information X is equal to information Y, the flow advances to step S9. At step S9, information X is used as alternative moving vector information to determine whether the mode is the skip mode or the spatial direct mode.

In contrast, when information X is not equal to information Y, the flow advances to step S8. At step S8, information X is discarded. Instead, information X is used as alternative moving vector information for a block of 16 x 16 or a block of 8 x 8. In this case, when information X is used as an alternate moving vector, there is a possibility of which the compression efficiency is improved.

When the alternate moving vector information has been determined in the foregoing procedure, the flow advances to step S11. At step S11, any mode determining process is performed on the basis of each alternative evaluation index calculated in each process.

Next, a picture information encoding apparatus according to a second embodiment of the present invention will be described. Since the structural elements of the picture information encoding apparatus according to this embodiment are the same as those of the picture information encoding apparatus according to the first embodiment shown in Fig. 10, a block diagram for the picture information encoding apparatus of the second embodiment is omitted. The picture information encoding apparatus of the second embodiment is different from that of the first embodiment in processes that the pseudo computing section performs. Thus, in the second embodiment, processes that a pseudo computing section (hereinafter designated by reference numeral 24') performs will be mainly described.

The pseudo computing section 24' does not use determined information of neighbor blocks, but sets all information for a predetermined value, for example 0. In other words, in the skip mode, the pseudo computing section 24' sets the value of each component of the moving vector for 0. In the spatial direct mode, the pseudo computing section 24' sets the values of reference indexes of List0 and List1 for 0 and the values of moving vectors of List0 and List1 for 0. The other processes of the pseudo computing section 24' of the second embodiment are the same as those of the pseudo computing section 24 of the first embodiment.

According to the second embodiment, the pseudo computing section 24' may omit computing moving vector information with which it is determined whether the mode is the skip mode or the spatial direct mode.

Thus, the picture information encoding apparatus is structured so that it does not prevent a high speed parallel process from being preformed. This function can be implemented by a software system (software encoding) using a computer such as a PC (Personal Computer). For example, an embodiment using a PC including for example a CPU (Central Processing Unit), a memory, a hard disk, a record medium driving device, a network interface, and a bus that mutually connects these devices will be implemented.

In this embodiment, the CPU may be provided with a co-processor such as a DSP (Digital Signal Processor). The CPU executes functions of individual sections such as the foregoing A/D converting section 11 according to a command of a program loaded into the memory. When necessary, a memory that can be accessed at high speed is used to temporarily store data. Buffers such as the screen rearranging buffer 12 and the storage buffer 17, and the frame memory 21 include a memory.

The program that accomplishes such a function is normally stored in an external storage device such as a hard disk. When the user or the like issues a command for the encoding process, the program is loaded into the memory. The program may be recorded on a CD (Compact Disc)-ROM (Read Only Memory) or a DVD (Digital Versatile Disk)-ROM and read to the hard disk or the like through the record medium driving device. As another embodiment, when the personal computer is connected to a network such as the Internet through a network interface, the program may be recorded from another computer or a site to the hard disk or the like through the network.

In the foregoing, a feature of the present invention was described with an example of a picture information encoding apparatus that outputs AVC picture compression information. However, the scope of the present invention is not limited to the feature. The present invention can be applied to a picture information encoding apparatus that outputs picture compression information according to any picture encoding system that uses a motion predicting process and DPCM for a moving vector encoding process, such as MPEG-1/2/4 or H.263.

**Claims**

1. A picture information encoding method of performing an encoding process for picture information using a motion prediction, wherein the encoding process is performed for a block with at least one of moving vector information and coefficient information being omitted and the encoding process has an encoding mode in which the omitted information can be restored at a decoding side according to a predetermined rule, the method comprising the steps of:

   determining whether the block can be encoded in the encoding mode with alternative information including motion information of predetermined adjacent blocks of the block; and
   generating pseudo motion information instead of the unusable motion information and providing the pseudo motion information as the alternative information, when the motion information of at least one of the adjacent blocks is unusable.

2. The picture information encoding method as set forth in claim 1,
   wherein the pseudo motion information is usable motion information of a neighbor block of an adjacent block that has the unusable motion information.

3. The picture information encoding method as set forth in claim 1,
   wherein the pseudo motion information is a predetermined value.

4. The picture information encoding method as set forth in claim 1,
   wherein the encoding mode includes a first mode in which the block is encoded with the moving vector information and the coefficient information being omitted, and
   wherein at the determining step and the pseudo computing step the moving vector information is treated as the motion information in the first mode.

5. The picture information encoding method as set forth in claim 1,
   wherein the encoding mode includes a second mode in which when the block is encoded with the moving vector information being omitted, and
   wherein at the determination step and the pseudo computation step the moving vector information and the reference index information are treated as the motion information in the second mode.

6. The picture information encoding method as set forth in claim 2,
   wherein the block is encoded according to MPEG4/AVC standard, and
   wherein when the pseudo motion information does not match the motion information computed according to the MPEG4/AVC standard, at the determination step, the pseudo motion information is not used as the alternative information.

7. The picture information encoding method as set forth in claim 2,
   wherein the block is encoded according to MPEG4/AVC standard, and
   wherein when the pseudo motion information does not match the motion information computed according to the MPEG4/AVC standard, at the determination step, the pseudo motion information is alternative moving vector information for a block of 16 x 16 in a first mode in which the block is encoded with the moving vector information and the coefficient information being omitted and the pseudo motion information is alternative moving vector information for a block of 16 x 16 or a block of 8 x 8 in a second mode in which the block is encoded with the moving vector information being omitted.

8. The picture information encoding method as set forth in claim 2,
   wherein a block that has a larger spatial distance than the adjacent block that has the unusable motion information is selected as the neighbor block.

9. A picture information encoding apparatus that performs an encoding process for picture information using a motion prediction, wherein the encoding process is performed for a block with at least one of moving vector information and coefficient information being omitted and the encoding process has an encoding mode in which the omitted information can be restored at a decoding side according to a predetermined rule, the apparatus comprising:

   a determining section that determining whether the block can be encoded in the encoding mode with alternative information including motion information of predetermined adjacent blocks of the block; and
   a pseudo computing section that generates pseudo motion information instead of unusable motion information and provides the pseudo motion information as the alternative information, when the motion information of at least one of the adjacent blocks is unusable.

10. A program that causes a computer to execute a picture information encoding method of performing an encoding process for picture information using a motion prediction, wherein the encoding process is performed for a block with at least one of moving vector information and coefficient information being omitted and the encoding process has an encoding mode in which the omitted information can be restored at a decoding side according to a predetermined rule, the method comprising the steps of:

   determining whether the block can be encoded in the encoding mode with alternative information including motion information of predetermined adjacent blocks of the block; and
   generating pseudo motion information instead of the unusable motion information and providing the pseudo motion information as the alternative information, when the motion information of at least one of the adjacent blocks is unusable.

# Fig. 1

100 PICTURE INFORMATION ENCODING APPARATUS

INPUT SIGNAL → A/D CONVERTING SECTION (101) → SCREEN REARRANGING BUFFER (102) → (+/−) (103) → ORTHOGONAL TRANSFORMING SECTION (104) → QUANTIZING SECTION (105) → LOSSLESS ENCODING SECTION (106) → STORAGE BUFFER (107) → PICTURE COMPRESSION INFORMATION

RATE CONTROLLING SECTION (114)

INVERSELY QUANTIZING SECTION (108)

INVERSELY ORTHOGONAL TRANSFORMING SECTION (109)

DEBLOCKING FILTER (110)

FRAME MEMORY (111)

MOTION PREDICTING AND COMPENSATING SECTION (113)

INTRA PREDICTING SECTION (112)

# Fig. 2

120 PICTURE INFORMATION
DECODING APPARATUS

PICTURE
COMPRESSION
INFORMATION

121 STORAGE BUFFER

122 LOSSLESS DECODING SECTION

123 INVERSELY QUANTIZING SECTION

124 INVERSELY ORTHOGONAL TRANSFORMING SECTION

125

DEBLOCKING FILTER

131

129

MOTION PREDICTING AND COMPENSATING SECTION

INTRA PREDICTING SECTION

130

FRAME MEMORY

128

126 SCREEN REARRANGING BUFFER

127 D/A CONVERSION SECTION

OUTPUT SIGNAL

## Fig. 3

REFERENCE FRAMES

CURRENT FRAME

t ⟶

# Fig. 4

| | | | |
|---|---|---|---|
| MACRO BLOCK PARTITIONS | 0 | 0 / 1 | 0 \| 1 | 0 1 / 2 3 |

| | | | |
|---|---|---|---|
| SUB MACRO BLOCK PARTITIONS | 0 | 0 / 1 | 0 \| 1 | 0 1 / 2 3 |

# Fig. 5

# *Fig. 6*

*Fig. 7A*

| D | B | C |
|---|---|---|
| A | E | |

*Fig. 7B*

B(4 × 8)

A(8 × 4)

C
(16 × 8)

E
(16 × 16)

# *Fig. 8*

*Fig. 9A*

A          X

*Fig. 9B*

D          B          C

          X

# Fig. 10

10 PICTURE INFORMATION
ENCODING APPARATUS

EP 1 746 842 A1

# Fig. 11

|     |     |     |
| --- | --- | --- |
| D"  | B"  | C"  |
| D'  | B'  | C'  |
| D   | B   | C   |

| A"  | A'  | A   | X   |
| --- | --- | --- | --- |

# Fig. 12

# Fig. 13

START

S1

A

MOTION
PREDICTING
AND
COMPENSATING
SECTION

S2

B

INTRA
PREDICTING
SECTION

S3

S4

S5

MODE
DETERMINING
SECTION

S6

NO — S7 — YES

S8

S9

S10

END

C

DESCRIPTION OF REFERENCE NUMERALS

| | |
|---|---|
| 11 | A/D CONVERTING SECTION |
| 12 | SCREEN REARRANGING BUFFER |
| 13 | ADDING DEVICE |
| 14 | ORTHOGONAL TRANSFORMING SECTION |
| 15 | QUANTIZING SECTION |
| 16 | LOSSLESS ENCODING SECTION |
| 17 | STORAGE BUFFER |
| 18 | INVERSELY QUANTIZING SECTION |
| 19 | INVERSELY ORTHOGONAL TRANSFORMING SECTION |
| 20 | DEBLOCKING FILTER |
| 21 | FRAME MEMORY |
| 22 | INTRA-PREDICTING SECTION |
| 23 | MOTION PREDICTING AND COMPENSATING SECTION |
| 24 | PSEUDO COMPUTING SECTION |
| 25 | MODE DETERMINING SECTION |
| 26 | RATE CONTROLLING SECTION |

## INTERNATIONAL SEARCH REPORT

| | International application No. |
|---|---|
| | PCT/JP2005/001560 |

**A. CLASSIFICATION OF SUBJECT MATTER**
Int.Cl[7]  H04N7/32

According to International Patent Classification (IPC) or to both national classification and IPC

**B. FIELDS SEARCHED**

Minimum documentation searched (classification system followed by classification symbols)
Int.Cl[7]  H04N7/26-7/68

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Thomas Wiegand, Gary Sullivan, Ajay Luthra, "Draft Errata List with Revision-Marked Corrections for H.264/AVC", JVT-I050, ISO/IEC JTC1/SC29/WG11 and ITU-T SG16 Q.6, 05 September, 2003 (05.09.03), pages 110, 113 to 116 | 1-10 |
| Y | Kiyofumi ABE, Satoshi KONDO, Shin-ya KADONO, Bernhard Schuur, "Complexity Reduction about Memory for B-picture", JVT-F062, ISO/IEC JTC1/SC29/WG11 and ITU-T SG16 Q.6, 13 December, 2002 (13.12.02), pages 5 to 6 | 1-10 |

☒ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 May, 2005 (12.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

EP 1 746 842 A1

**INTERNATIONAL SEARCH REPORT**

| International application No. |
|---|
| PCT/JP2005/001560 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-007563 A  (Matsushita Electric Industrial Co., Ltd.),<br>08 January, 2004 (08.01.04),<br>Full text<br>& EP 1450565 A1        & US 2004/0146105 A<br>& WO 2003/090474 A1 | 1-10 |
| Y | JP 2000-030047 A  (Sony Corp.),<br>28 January, 2000 (28.01.00),<br>Par. No. [0001]; Fig. 1<br>& US 2002/0031184 A1 | 1-10 |
| Y | JP 2000-261797 A  (Nippon Telegraph And Telephone Corp.),<br>22 September, 2000 (22.09.00),<br>Par. Nos. [0001] to [0011]<br>(Family: none) | 1-10 |
| Y | JP 2001-309386 A  (Mitsubishi Electric Corp.),<br>02 November, 2001 (02.11.01),<br>Par. No. [0018]; Figs. 3, 5, 9<br>& US 2001/0033617 A1 | 1-10 |
| Y | JP 2004-007506 A  (Matsushita Electric Industrial Co., Ltd.),<br>08 January, 2004 (08.01.04),<br>Par. Nos. [0102], [0114], [0148]; Fig. 4<br>& BR 303566 A        & CA 2444357 A1<br>& WO 2003/088675 A1 | 1-10 |
| Y | JP 2000-023190 A  (Sony Corp.),<br>21 January, 2000 (21.01.00),<br>Par. Nos. [0125], [0136]<br>(Family: none) | 1-10 |
| Y | JP 04-109789 A  (Matsushita Electric Industrial Co., Ltd.),<br>10 April, 1992 (10.04.92),<br>Page 2, lower right column, line 11 to page 3, lower left column, line 3<br>(Family: none) | 1-10 |
| Y | JP 01-114180 A  (Canon Inc.),<br>02 May, 1989 (02.05.89),<br>Page 2, upper left column, line 2 to lower left column, line 7<br>& US 4975866 A1 | 1-10 |
| Y | JP 06-282946 A  (Canon Inc.),<br>07 October, 1994 (07.10.94),<br>Claim 1; Par. No. [0026]<br>(Family: none) | 1-10 |

Form PCT/ISA/210 (continuation of second sheet) (January 2004)

**INTERNATIONAL SEARCH REPORT**

| International application No. |
|---|
| PCT/JP2005/001560 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2004-096705 A  (Matsushita Electric Industrial Co., Ltd.), 25 March, 2004 (25.03.04), Full text & BR 302580 A          & CA 2438295 A & EP 1439713 A1         & WO 2003/061297 A1 | 1-10 |
| P,A | JP 2005-070938 A  (Matsushita Electric Industrial Co., Ltd.), 17 March, 2005 (17.03.05), Par. Nos. [0002] to [0003] (Family: none) | 1-10 |
| P,A | JP 2005-005844 A  (Hitachi, Ltd.), 06 January, 2005 (06.01.05), Par. Nos. [0002] to [0029] (Family: none) | 1-10 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. SULLIVAN ; T. WIEGAND.** Rate-Distortion Optimization for Video Compression. *IEEE Signal Processing Magazine,* November 1998